# EUROPÄISCHE PATENTSCHRIFT

(11) **EP 1 688 330 B1**
(45) Veröffentlichungstag und Bekanntmachung des Hinweises auf die Patenterteilung: **06.02.2008**
(21) Anmeldenummer: 05025143.8
(22) Anmeldetag: 17.11.2005
(51) Int. Cl.: B60T 5/00

(54) **Luftleitvorrichtung an einer Vorderachse bzw. Hinterachse eines Kraftfahrzeugs**
Air flow guiding device attached to vehicle front or rear axle
Chicane pour l'air attaché à l'essieu avant ou arrière d'un véhicule

(30) Priorität: 04.02.2005 DE 102005005113
(43) Veröffentlichungstag der Anmeldung: 09.08.2006
(73) Patentinhaber: Dr.Ing. h.c. F. Porsche Aktiengesellschaft, 70435 Stuttgart (DE)
(72) Erfinder: Toman, Vilem, 75446 Wiernsheim (DE)

(56) Entgegenhaltungen:
- EP-A- 0 331 888
- EP-A- 1 083 359
- DE-A1- 3 107 692
- PATENT ABSTRACTS OF JAPAN Bd. 017, Nr. 430 (M-1460), 10. August 1993 (1993-08-10) -& JP 05 092757 A (TOYOTA MOTOR CORP), 16. April 1993 (1993-04-16)

## Beschreibung

Die Erfindung bezieht sich auf eine Luftleitvorrichtung an einer Vorderachse bzw. Hinterachse eines Kraftfahrzeugs nach dem Oberbegriff des Anspruchs 1.

Aus der EP 0 331 888 A1 ist eine Luftleitvorrichtung zum Kühlen von Radbremsen bekannt, die ein entgegen einem ankommenden Luftstrom angestelltes Umlenkelement umfasst, das fahrzeugseitig an einem Radführungslenker gehalten ist. Des weiteren ist aus der DE 31 07 692 A1 ein Umlenkelement bekannt, das einen Luftleitkanal durch hochgestellte Schenkel bildet und das den unter dem Fahrzeug entlangstreichenden Fahrtwind zu einer Bremse umleitet, wodurch diese gekühlt wird.

Die Aufgabe der Erfindung besteht darin, eine Luftleitvorrichtung zu schaffen, die eine relativ großflächige Luftprallfläche zur Luftführung aufweist und darüber hinaus ein unbehindertes Bewegen von Fahrzeugbauteilen während eines Lenkvorgangs und Ein- und Ausfedern gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass keine Beschädigung und/oder Behinderung von Fahrzeugbauteilen bei Bewegungsabläufen durch Lenkvorgänge und Ein- und Ausfedern erfolgen kann, in dem das in die Bewegungsbahnen der Fahrzeugbauteile wie einem Fahrzeugrad und einem Radträgerarm ragende Umlenkelement mit örtlich entsprechenden elastischen Bereichen ausgestattet ist. Nach der Erfindung vorgesehen, dass das Umlenkelement aus zwei unter einem Winkel zueinander angestellten starren Prallflächen besteht, die am oberen Rand eine gemeinsame Abstellung aufweisen, in der mindestens zwei elastische Anschlagbereiche für Fahrzeugteile angeordnet sind. Durch diese Ausbildung des Umlenkelements mit den elastischen Anschlagbereichen kann ein flächenmäßig großes Umlenkelement und somit eine große Luftprallfläche erzielt werden, welche auch in die Bewegungsbahnen der angrenzenden Fahrzeugbauteile ragen kann, ohne diese zu behindern.

In diesem Zusammenhang ist nach der Erfindung des Weiteren vorgesehen, dass der elastische Anschlagbereich für einen Radreifen am inneren Ende der Abstellung der einen Prallfläche und der weitere elastische Anschlagbereich für den Radträgerarm am äußeren Ende der Abstellung der der Bremsscheibe zugerichteten Prallfläche angeordnet ist. Der elastische Anschlagbereich am äußeren Ende der Abstellung erstreckt sich teilweise von dieser Abstellung bis in die Prallfläche hinein. Es ist des Weiteren vorgesehen, dass der elastische Anschlagbereich am äußeren Ende der Abstellung und die Prallfläche sich randseitig in einem ersten Abschnitt mit einer Tiefe weiter in die Prallfläche hinein erstreckt als ein anschließender zweiter Abschnitt mit einer geringeren Tiefe. Somit sind gezielte elastische Bereiche zu schaffen, wodurch insbesondere die Bewegungsbahn des Radträgerarms Berücksichtigung findet und ein randseitig angeordneter elastischer Anschlagbereich geschaffen wird, der eine größere Tiefe in der Prallfläche aufweist als der anschließende weitere elastische Bereich.

Damit die Spurstange der Lenkreinrichtung des Fahrzeugs freigängig durch das Umlenkelement geführt werden kann, ist in diesem eine Durchtrittsöffnung vorgesehen, welche entsprechend der Bewegungskurve ausgeführt ist. Zur Montage der Spurstange bzw. zum Überstreifen des Umlenkelements weist die Durchtrittsöffnung in der Anstellung eine Trennstelle auf, welche über einen Verschluss zusammen haltbar ist. Die Durchtrittsöffnung kann auch mit elastischen Wandteilen um die Sparstange herum geschlossen werden.

Damit eine zwangsgeführte und zielgerichtete Luftführung zur Bremse bzw. zur Bremsscheibe erreicht wird, bildet sich zwischen der oberen randseitigen Abstellung des Umlenkelements und einem bereichsweise angeordneten etwa mittigen Steg in den Prallflächen ein oberer Luftleitkanal und zwischen diesem Steg und einer unteren bereichsweise angeordneten unteren randseitigen Abstellung ein weiterer Luftleitkanal. Somit kann über die beiden Luftleitkanäle am Umlenkelement die anströmende Luft ohne Verlust direkt der Bremsscheibe in vorgegebener Richtung als gebündelter Luftstrom zwangsweise zugeführt werden.

Ein Ausführungsbeispiel der Erfindung ist in den Zeichnungen dargestellt und wird im Folgenden näher beschrieben.

Es zeigen
- Fig. 1: eine schaubildliche Darstellung des eingebauten Umlenkelements an einer Vorderachse eines Kraftfahrzeugs,

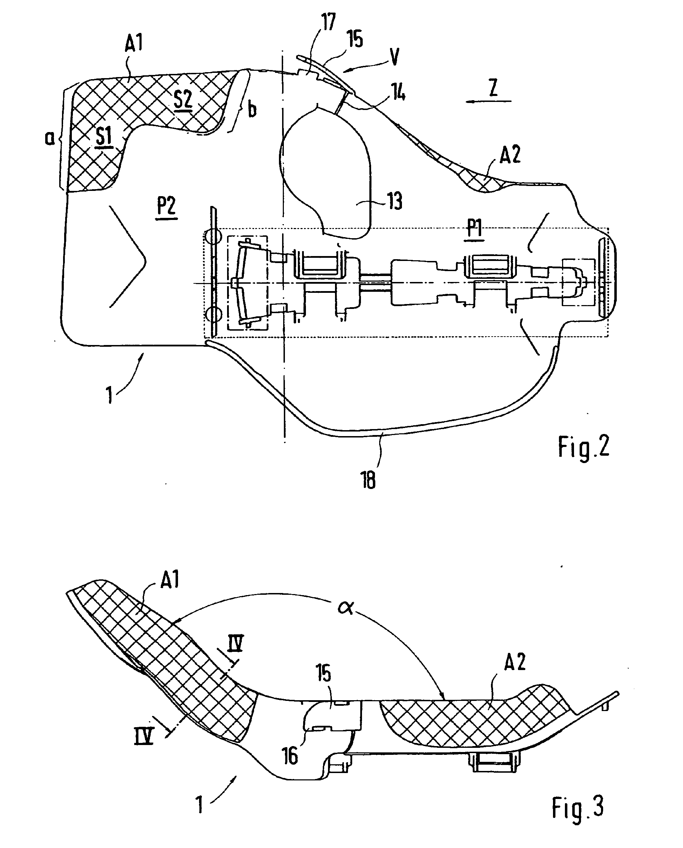

- Fig. 2: eine Vorderansicht des Umlenkelements mit elastischen Anschlagbereichen,
- Fig. 3: eine Draufsicht zu Fig. 2 auf das Umlenkelement,

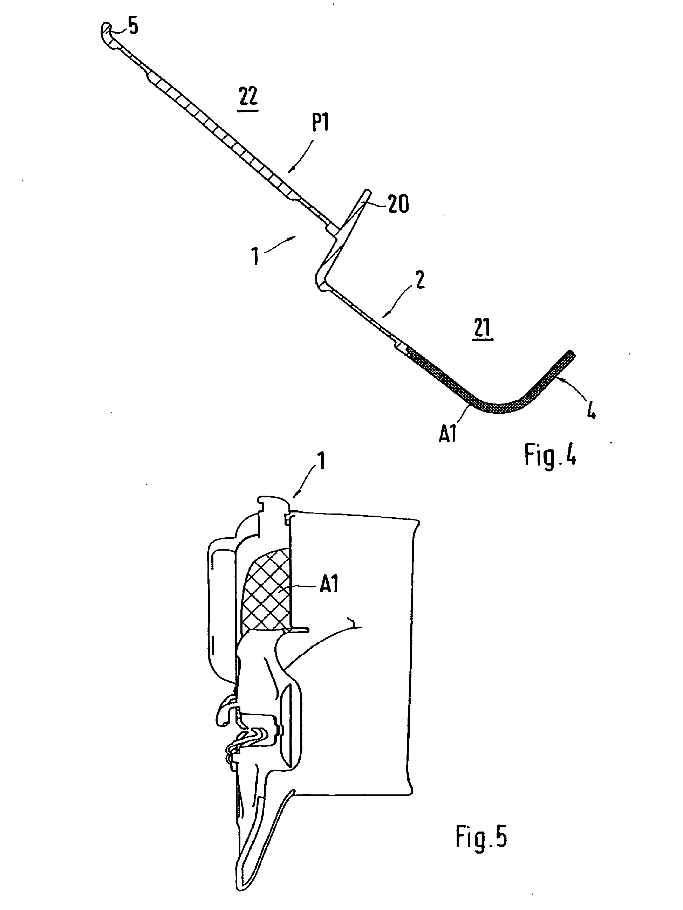

- Fig. 4: einen Schnitt nach der Linie IV-IV der Fig. 3 des Umlenkelements und
- Fig. 5: eine Ansicht auf das Umlenkelement in Pfeilrichtung Z der Fig. 2 gesehen.

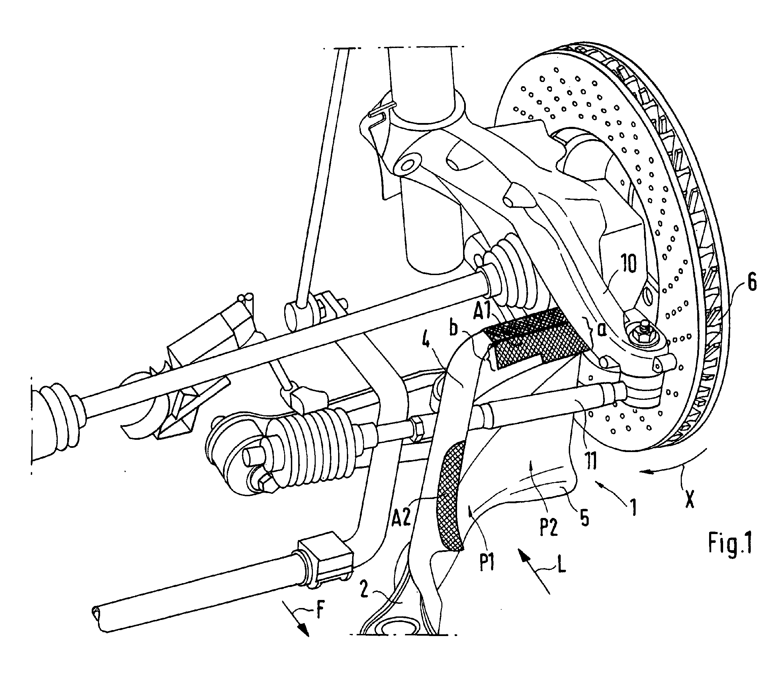

Wie in Fig. 1 näher zu erkennen ist, ist ein aufrecht angeordnetes starres Umlenkelement 1 für eine entgegen der Fahrtrichtung F ankommender Luftstrom L mit einem Radführungslenker 2 aufklipsbar fest verbunden. Das Umlenkelement 1 umfasst Luftprallflächen P1 und P2, welche über eine obenliegende durchgehende Abstellung bzw. Abwinkelung 4 in Fahrtrichtung F und eine untere bereichsweise weitere Abstellung bzw. Abwinkelung 5 begrenzt ist. Zum Auffangen und Weiterleiten des ankommenden Luftstromes L sind die Prallflächen P1 und P2 des Umlenkelements 4 in zwei unter einem Winkel α zueinander angestellten Flächen unterteilt.

In der oberen Abstellung 4 sowie in der Prallfläche P2 ist ein erster elastischer Anschlagbereich A1 und ein zweiter elastischer Anschlagbereich A2 vorgesehen. Der erste elastische Anschlagbereich A1 ist am äußeren einer Bremsscheibe 6 zugerichteten Ende des Umlenkelements 1 angeordnet und das zweite elastische Anschlagelement A2 ist am inneren Ende des Umschlagelements 1 vorgesehen.

Der elastische Anschlagbereich A1 erstreckt sich teilweise von der Abstellung 4 bis in die Prallfläche P2 und ist stufenförmig ausgeführt in der Weise, dass der unmittelbar von Rand der Prallfläche P2 begrenzte elastische Bereich eine Tiefe mit dem Maß a und der anschließende weitere elastische Bereich eine geringere Tiefe mit dem Maß b aufweist.

Der elastische Anschlagbereich A1 im Umlenkelement 4 dient dazu, dass bei einer Lenkbewegung des Radträgerarmes 10 eine unbehinderte Bewegung in Pfeilrichtung X möglich wird, wobei der Schwenkbewegung des Lenkerarmes 10 Rechnung getragen wird. Der weitere elastische Anschlagbereich A2 kann bei einem Radeinschlag elastisch weggedrückt werden und stellt keine Behinderung für das Fahrzeugrad dar.

Damit eine Spurstange 11 ohne Behinderung durch das Umlenkelement 4 vom Lenkgetriebe (nicht gezeigt) bis zum Radträgerarm 10 durchgeführt werden kann, weist das Umlenkelement 4 eine Durchtrittsöffnung 13 auf, die in der Größe entsprechend der Bewegungsmöglichkeit im Raum dimensioniert ist. Zum Einfädeln der Spurstange 11 von außen in das Umlenkelement 1 weist dieses die Öffnung 13 mit einer Trennstelle 14 auf, die über eine angeformte Lasche 15 zu schließen ist. Die Lasche 15 ist mit einem Haken 16 versehen, der einen Vorsprung 17 auf der Abstellung 4 klemmend übergreift. Die Durchtrittsöffnung kann von elastischen Wandteilen geschlossen sein, welche die Spurstange 11 umgeben.

In den Prallflächen P1 und P2 des Umlenkelements 4 bilden sich zwischen der oberen durchgehenden Abstellung 4 und einem zwischen den Abstellungen 4 und 5 angeformten Steg 20 ein erster oberer Luftleitkanal 21, wobei der Steg 20 beabstandet zur Abstellung 4 in etwa parallel verläuft. Ein zweiter unterer Luftleitkanal 22 bildet sich zwischen dem Steg 20 und der unteren bereichsweise vorgesehenen Abstellung 5.

## Patentansprüche

1. Luftleitvorrichtung an einer Vorderachse bzw. Hinterachse eines Kraftfahrzeugs zum Zuführen von Luft zu einer Bremsscheibe (6) einer Fahrzeugbremse, wobei die Luftleitvorrichtung aus einem am Radführungslenker befestigten Umlenkelement (1) besteht und eine dem Luftstrom (L) entgegengerichtete aufrechte Luftprallfläche bildet, **dadurch gekennzeichnet, dass** das Umlenkelement (1) aus zwei unter einem Winkel (α) zueinander angestellten starren Prallfllächen (P1 und P2) besteht, die am oberen Rand eine gemeinsame Abstellung (4) aufweisen, in der mindestens zwei elastische Anschlagbereiche (A1 und A2) für zu verschwenkende Fahrzeugbauteile angeordnet sind.

2. Luftleitvorrichtung nach Anspruch 1, **dadurch gekennzeichnet, dass** der elastische Anschlagbereich (A2) für einen Radreifen am inneren Ende der Abstellung (4) der einen Prallfläche (P1) und der weitere elastische Anschlagbereich (A1) für den Radträgerarm (10) am äußeren Ende der der Abstellung (4) der Bremsscheibe zugerichteten Prallfläche (P2) angeordnet ist.

3. Luftleitvorrichtung nach Anspruch 2, **dadurch gekennzeichnet, dass** der elastische Anschlagbereich (A1) am äußeren Ende der Abstellung (4) sich teilweise von der Abstellung (4) bis in die der Abstellung (4) der Bremsschreibe (6) zugerichtete Prallfläche (P2) hinein erstreckt.

4. Luftleitvorrichtung nach den Ansprüchen 2 oder 3, **dadurch gekennzeichnet, dass** der elastische Anschlagbereich (A1) am äußeren Ende der Abstellung (4) und die der Abstellung (4) der Bremsscheibe (6) zugerichtete Prallfläche (P2) sich in einem ersten randseitigen Abschnitt (S1) mit dem Tiefermaß (a) weiter in die Prallfläche (P2) erstreckt als ein anschließender zweiter Abschnitt (S2) mit dem Tiefenmaß (b).

5. Luftleitvorrichtung nach einem der vorhergehenden Ansprüche, **dadurch gekennzeichnet dass** zur freigängigen Durchführung einer Spurstange (11) im Umlenkelement (1) eine der Bewegungskurve der Spurstange (11) entsprechend ausgebildete Durchtrittsöffnung (13) vorgesehen ist, die in der Abstellung (4) eine Trennstelle (14) aufweist, welche über einen Verschluss (V) zusammen haltbar ist.

6. Luftleitvorrichtung nach Anspruch 5, **dadurch gekennzeichnet, dass** der Verschluss (V) aus einer Lasche (15) besteht, die mit einem Haken (16) einen Vorsprung (17) an der Abstellung (4) klemmend umgreift.

7. Luftleitvorrichtung nach einem der vorhergehenden Ansprüche, **dadurch gekennzeichnet, dass** sich zwischen der oberen randseitigen Abstellung (4) des Umlenkelements (1) und einem bereichsweise angeordneten etwa mittigen Steg (20) in den Prallflächen (P1) und (P2) ein oberer Luftleitkanal (21) ausbildet und zwischen diesem Steg (20) und einer unteren bereichsweise angeordneten unteren randseitigen Abstellung (5) ein weiterer Luftleitkanal (22) gebildet wird.

## Claims

1. Air guiding device on a front axle or rear axle of a motor vehicle for supplying air to a brake disc (6) of a vehicle brake, with the air guiding device being composed of a deflecting element (1) which is fastened to the wheel control link and forming an upright air impingement face which is aligned counter to the air flow (L), **characterized in that** the deflecting element (1) is composed of two rigid impingement faces (P1 and P2) which are set at an angle (α) to one another and which, at the upper edge, have a common bent portion (4) in which are arranged at least two elastic stop regions (A1 and A2) for vehicle components which are to be pivoted.

2. Air guiding device according to Claim 1, **characterized in that** the elastic stop region (A2) for a wheel tyre is arranged at the inner end of the bent portion (4) of the one impingement face (P1) and the further elastic stop region (A1) for the wheel carrier arm (10) is arranged at the outer end of the impingement face (P2) which is aligned towards the bent portion (4) of the brake disc.

3. Air guiding device according to Claim 2, **characterized in that** the elastic stop region (A1) at the outer end of the bent portion (4) extends partially from the bent portion (4) into the impingement face (P2) which is aligned towards the bent portion (4) of the brake disc (6).

4. Air guiding device according to Claims 2 or 3, **characterized in that** the elastic stop region (A1) at the outer end of the bent portion (4), and the impingement face (P2) which is aligned towards the bent portion (4) of the brake disc (6), extends further into the impingement face (P2) in a first edge-side section (S1) with the depth dimension (a), than an adjoining, second section (S2) with the depth dimension (b).

5. Air guiding device according to one of the preceding claims, **characterized in that**, for the unobstructed leadthrough of a track rod (11) in the deflecting element (1), a passage opening (13) which is formed correspondingly to the movement curve of the track rod (11) is provided, which passage opening (13) has, in the bent portion (4), a parting point (14) which can be held together by means of a closure (V).

6. Air guiding device according to Claim 5, **characterized in that** the closure (V) is composed of a lug (15) which, with a hook (16), engages in a clamping manner around a projection (17) on the bent portion (4).

7. Air guiding device according to one of the preceding claims, **characterized in that** an upper air guiding duct (21) is formed between the upper edge-side bent portion (4) of the deflecting element (1) and an approximately central web (20), which is arranged in regions, in the impingement faces (P1) and (P2), and a further air guiding duct (22) is formed between said web (20) and a lower edge-side bent portion (5) which is arranged in regions.

## Revendications

1. Dispositif déflecteur d'air associé à un essieu avant ou selon le cas à un essieu arrière d'un véhicule automobile, destiné à envoyer de l'air à un disque de frein (6) d'un frein de véhicule, le dispositif déflecteur d'air étant constitué d'un élément déflecteur (1) fixé au bras de guidage de roue et formant une surface verticale d'impact de l'air orientée de façon opposée à l'écoulement de l'air (L), **caractérisé en ce que** l'élément déflecteur (1) est constitué de deux surfaces d'impact (P1 et P2) rigides disposées l'une par rapport à l'autre suivant un angle (α), lesquelles présentent une joue courbée (4) commune sur le bord supérieur, dans laquelle sont disposées au moins deux zones de butée souples (A1 et A2) pour des organes de véhicule destinés à pivoter.

2. Dispositif déflecteur d'air selon la revendication 1, **caractérisé en ce que** la zone de butée souple (A2) pour un bandage de roue est disposée à l'extrémité intérieure de la joue courbée (4) de l'une des surfaces d'impact (P1) et **en ce que** l'autre zone de butée souple (A1) pour le bras de suspension de roue (10) est disposée à l'extrémité extérieure de la surface d'impact (P2) tournée vers la joue courbée (4) du disque de frein (6).

3. Dispositif déflecteur d'air selon la revendication 2, **caractérisé en ce que** la zone de butée souple (A1) à l'extrémité extérieure de la joue courbée (4) s'étend partiellement depuis la joue courbée (4) jusque dans la surface d'impact (P2) tournée vers la joue courbée (4) du disque de frein (6).

4. Dispositif déflecteur d'air selon l'une des revendications 2 ou 3, **caractérisé en ce que** la zone de butée souple (A1) à l'extrémité extérieure de la joue courbée (4) et de la surface d'impact (P2) tournée vers la joue courbée (4) du disque de frein (6) s'étend dans un premier tronçon (S1) du côté du bord présentant une dimension en profondeur (a) plus loin dans la surface d'impact (P2) qu'un second tronçon contigu (S2) présentant une dimension en profondeur (b).

5. Dispositif déflecteur d'air selon l'une quelconque des revendications précédentes, **caractérisé en ce qu'**en vue de la libre traversée d'une barre d'accouplement (11) dans l'élément déflecteur (1), une ouverture de passage (13) conformée conformément à la courbe de déplacement de la barre d'accouplement (11) y est prévue, laquelle ouverture de passage (13) présente une zone de séparation (14) sur la joue courbée (4) pouvant être maintenue ensemble par l'intermédiaire d'une fermeture (V).

6. Dispositif déflecteur d'air selon la revendication 5, **caractérisé en ce que** la fermeture (V) est constituée d'une éclisse (15), laquelle enserre avec un crochet (16) une partie en saillie (17) sur la joue courbée (4).

7. Dispositif déflecteur d'air selon l'une quelconque des revendications précédentes, **caractérisé en ce qu'**un canal déflecteur d'air supérieur (21) se forme entre la joue courbée (4) du côté du bord supérieur de l'élément déflecteur (1) et une nervure (20) à peu près centrale disposée dans une zone partielle des surfaces d'impact (P1) et (P2) et **en ce qu'**un autre canal déflecteur d'air (22) est formé entre ladite nervure (20) et une joue courbée (5) disposée dans une zone partielle inférieure du coté du bord inférieur.
